Europäisches Patentamt

European Patent Office

Office européen des brevets

(19)

(11) Publication number: **0 055 598**
**B1**

(12) **EUROPEAN PATENT SPECIFICATION**

(45) Date of publication of patent specification: **03.06.87**

(21) Application number: **81306067.0**

(22) Date of filing: **23.12.81**

(51) Int. Cl.⁴: **B 62 M 3/08**

(54) **Cycle pedal.**

| | |
|---|---|
| (30) Priority: **28.12.80 JP 188818/80 u**<br>**30.10.81 JP 163161/81 u** | (73) Proprietor: **SHIMANO INDUSTRIAL COMPANY LIMITED**<br>**77, 3-cho Oimatsu-cho Sakai-shi**<br>**Osaka (JP)** |
| (43) Date of publication of application:<br>**07.07.82 Bulletin 82/27** | (72) Inventor: **Shimano, Keizo**<br>**81, 3-cho, Midorigaoka-minamimachi**<br>**Sakai-shi Osaka (JP)** |
| (45) Publication of the grant of the patent:<br>**03.06.87 Bulletin 87/23** | |
| (84) Designated Contracting States:<br>**BE DE FR GB IT** | (74) Representative: **Szczuka, Jan Tymoteusz et al**<br>**Cruikshank & Fairweather 19 Royal Exchange**<br>**Square**<br>**Glasgow G1 3AE Scotland (GB)** |
| (56) References cited:<br>**CH-A- 256 750**<br>**CH-A- 290 481**<br>**FR-A-2 143 090**<br>**FR-A-2 436 707**<br>**FR-A-2 440 866**<br>**FR-A-2 440 867**<br>**US-A-2 542 548** | |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a cycle pedal comprising a pedal body having a pedal shaft, said body having an upper surface on which are provided first and second foot support portions.

In general pedal bodies for cycle pedals as disclosed for example in United States Patent No. 2,542,548 and Swiss Patent No. 279,819, have foot support portions provided on either side of a pedal shaft and extending parallel thereto.

The foot support portions are disposed to extend rectilinearly parallel to the pedal shaft axis. However, when a cyclist places his foot on the pedal body the heads of the first, second, third, fourth and fifth metatarsi are disposed along an arcuate line, so that when the head of the first metatarsus is placed on the foot support portion, that of the fifth will tend to come out of contact with said support portion.

The skeleton of the human foot comprises an assembly of 26 bones, which are roughly divided from the point of view of construction, into tarsi, metatarsi, and phalanges. The tarsi are composed of seven bones of the calcaneous, talsus, cuboid, navicular, and first to third cuneiforms in a tightly knit combination, the metatarsi comprising five bones corresponding in number to the toes and extending forwardly from the group of tarsal bones and arranged laterally across the foot, the phalanges extending forwardly from the metatarsi and comprising 14 bones with the first phalange of the big toe comprising two bones and the second to fifth phalanges of the other toes each comprising three bones respectively.

From the point of view of the bone structure and function, the calcaneous, cuboid, first to third cuneiforms, first and third metatarsi, and first to third phalanges, are included in a first group, and the talus, navicular, fourth and fifth metatarsi, and fourth and fifth phalanges, are included in a second group.

The bones in the first group carry the weight of the body and function to kick the ground when a person steps forward and those in the second group function to balance his body for a smooth walk.

In the light of the above, the conventional pedal creates a problem in that the head of the fifth phalange is not supported by the foot support portion when that of the first phalange is placed thereon, so that the cyclist cannot transmit the downward thrust of his pedalling force effectively to the pedal body, and his pedalling movement tends to be poorly balanced and not smooth. As a result, it is difficult for him to maximise his pedalling force and obtain an efficient use of energy because his foot becomes tired relatively quickly.

FR—A—2440867 discloses a cycle pedal comprising a pedal body having a pedal shaft, said body having an upper surface on which are provided first and second foot support portions, said second foot support portion being rearwardly offset with respect to said first foot support portion. These foot support portions are not, however, able simultaneously properly to support the first and fifth metatarsal head portions. Neither in direct proximity to the pedal shaft axis.

It is an object of the present invention to avoid or minimize one or more of the above disadvantages.

The present invention provides a cycle pedal comprising a pedal body having a pedal shaft, said body having an upper surface on which are provided first and second foot support portions said second foot support portion being rearwardly offset with respect to said first foot support portion characterized in that said first and second foot support portions are formed and arranged substantially separately from each other to have a surface area sufficient simultaneously to support the head portion of a first metatarsus and at least the head portion of the fifth metatarsus of a cyclist's foot, respectively; at least said second foot support portion being intersected by a plane through the pedal shaft axis and at right angles to the general plane of said foot support portions; and said first and second foot support portions being displaced upwardly from the main pedal body.

Thus with a pedal of the present invention the treading or pedalling force is transmitted effectively to the pedal body through the head portion of the first metatarsus and the downward and return phases of the pedalling action are facilitated. Also, the effective supporting of the head portion of the fifth metatarsus on the second foot support portion enables the cyclist to achieve a well-balanced, smooth, and non-tiring pedalling action with an increased pedalling force.

Also, the pedal body of the invention enables provision of a sufficient degree of foot support necessary for pedalling with a minimum size of pedal body which as a result is simple in shape, lightweight, and inexpensive to produce.

The first and second foot support portions may be formed integrally with the pedal body, or provided on a member formed separately from the pedal body. The use of such a separate member facilitates the provision of an antiskid means on each foot support portion as well as the manufacture of a pedal having a common pedal body with different first and second foot support portions having various shapes, sizes, or spacings therebetween to suit different individual riders.

Furthermore, the first and second foot support portions, each of which has an area large enough to accommodate the head portions of all the metatarsi, may be flush at its upper surface with the pedal body, but preferably projects upwardly from the upper surface thereof and is provided with looped grooves as an anti-skid means at the upper surface of each said foot support portion.

Further preferred features and advantages of the invention will appear from the following detailed description of a preferred embodiment given by way of example and illustrated with reference to the accompanying drawings.

Fig. 1 is a partially cutaway plan view of a preferred embodiment of a pedal of the present invention;

Fig. 2 is a partial transverse sectional elevation taken on the line II—II in Fig. 1;

Fig. 3 is a longitudinal sectional elevation taken on the line III—III in Fig. 1; and

Fig. 4 is a sectional plan view of the foot support member only of the pedal of Fig. 1.

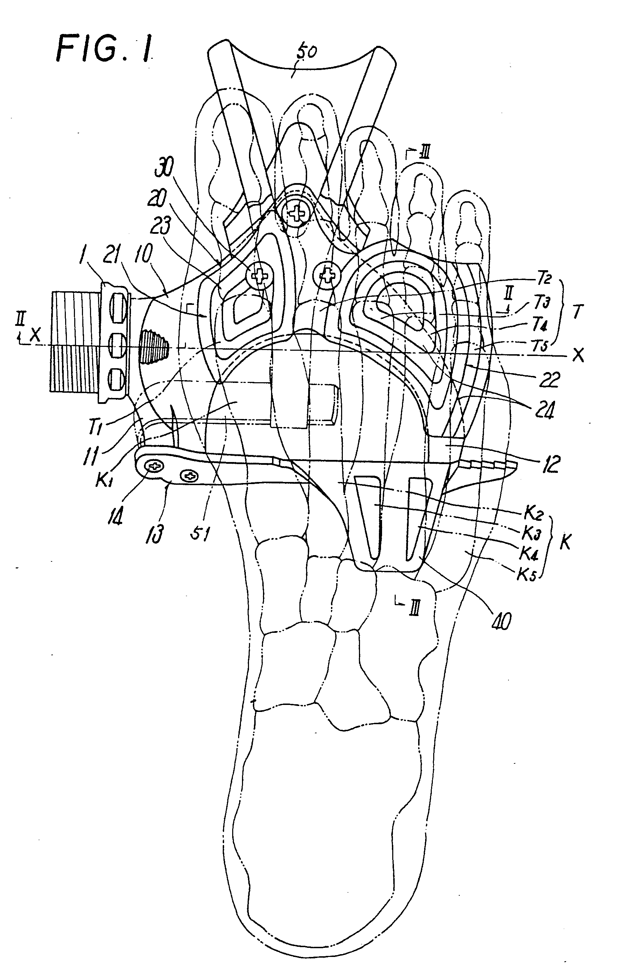

Fig. 1 shows a right-hand side pedal having a generally block-shaped pedal body 10 formed of an aluminum alloy by die casting and a generally plate-form foot support member 20 formed separately from the pedal body 10, also by die casting, the foot support member 20 being secured to the pedal body 10.

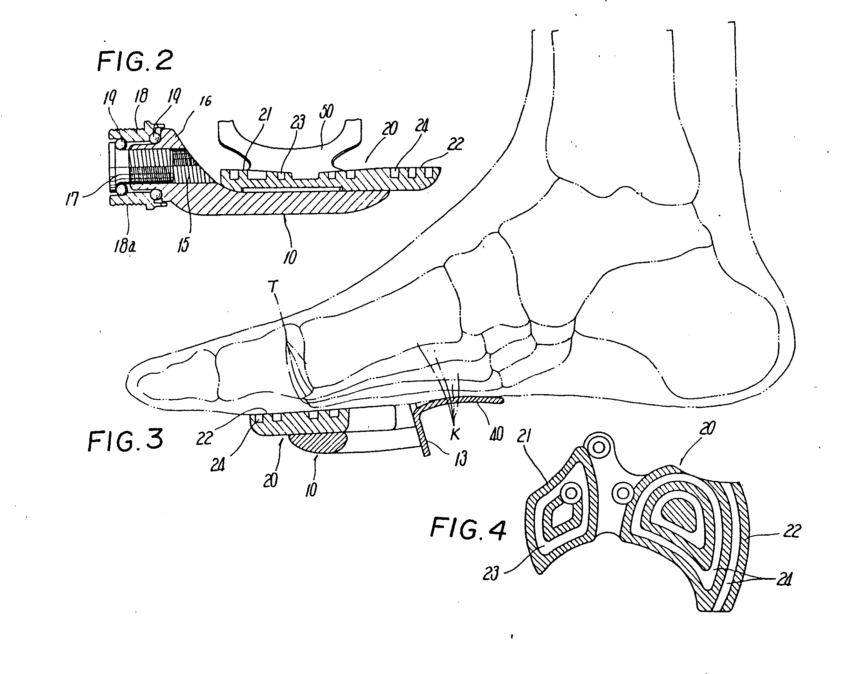

The pedal body 10, as viewed in Fig. 1, is generally V-shaped with the base of the V-shape projecting forwardly at a laterally intermediate position and the limbs 11, 12 of the V-shape extending rearwardly at either side. At the free ends of the limbs 11, 12 a rear side plate 13 formed separately from the body 10 is fixed with the aid of screws or the like. A tubular portion 16 having a threaded bore is provided at one side (the left side in the drawing) of the pedal body 10 and screw-threadedly engaged with a threaded pedal shaft 17 as shown in Fig. 2.

In Fig. 2, a bearing cylinder 18 is rotatably supported on the outer peripheries of the tubular member 16 and the pedal shaft 17 via ball bearings 19. The bearing cylinder 18 is provided at its outer periphery with a screw threaded portion 18a for screw threaded engagement with a crank arm (not shown) to rotatably support the pedal body 10 on the crank arm.

The foot support member 20 is fixed to the upper surface of the pedal body 10 with the aid of fixing means, such as screws or bolts, and is provided with a first foot support portion 21 for supporting the head portion $T_1$ of a first metatarsus $K_1$ of a cyclist's foot and a second foot support portion 22 for supporting at least the head $T_5$ of a fifth metatarsus $K_5$ of the second to fifth metatarsi $K_2$ to $K_5$, so that, when the first metatarsus head portion $T_1$ contacts the first foot support portion 21, at least the head portion $T_5$ of the fifth metatarsus $K_5$ is automatically brought into contact with the second foot support portion 22. In addition, the second foot support portion 22, as shown in Fig. 1, desirably has a sufficient area to accommodate the head portions $T_3$ to $T_5$ of the third to fifth metatarsi $K_3$ to $K_5$.

Alternatively, the first and second foot support portions 21 and 22 could be formed with a sufficiently large area to accommodate the head portions $T_2$ to $T_5$ of the second to fifth metatarsi $K_2$ to $K_5$, or to contact only the head portion $T_5$ of the firth metatarsus $K_5$, and may if desired be provided directly on the upper surface of the body 10 instead of on a separate support member.

The first and second foot support portions 21 and 22 are wide enough to support the head of each metatarsal bone of the cyclist's foot and project upwardly of the upper surfaces of the pedal body 10. A plurality of grooves 23 and 24 is provided in the upper surfaces of the foot support portions 21 and 22 and extend, for example, longitudinally and bilaterally of the body 10, so that the edges of grooves 23 and 24 serve to prevent the cyclist's foot from skidding. The use of grooves 23 and 24, which are looped longitudinally and bilaterally, is even more effective in preventing skidding in any direction.

Furthermore, the first and second foot support portions 21 and 22 are disposed in the vicinity of the longitudinal axis $X$—$X$ of the pedal shaft 17 and the greater part of each foot bearing portion 21 or 22 is positioned to the front of the axis $X$—$X$, the remainder being to the rear thereof.

The embodiment shown in the drawings has in fact also an auxiliary foot support surface 40 extending rearwardly from the rear side plate 13. The auxiliary foot support surface 40, when the head portions of the metatarsi press on the first and second foot bearing portions 21 and 22 respectively, supports the third to fifth metatarsi at the tarsal bone and portions thereof, thereby also transmitting a larger treading force to the auxiliary foot support surface 40.

The drawings also show a toe clip 50 supported in front of a laterally intermediate portion of the pedal body 10 provided with a toe strap extending across the rear ends of the pedal body limbs 11, 12, the toe clip 50 being supported at its root so as to be longitudinally displaceable relative to the pedal body 10, being clamped between the pedal body 10 and the foot support member 20 with the aid of the fixing means 30, and connected at its other, free, end with an intermediate portion of the toe strap 51.

As will be apparent from the above, when the head portion $T_1$ of the first metatarsus $K_1$ is brought into contact with the first foot support portion 21, at least the head portion $T_5$ of fifth metatarsus $K_5$ automatically comes into contact with the second foot support portion 22. Now when the cyclist treads down on the pedal body 10 to propel the cycle forwards, the first foot support portion 21 in contact with the head portion $T_1$ of the first metatarsus $K_1$ transmits the largest treading force whilst the second support portion 22 in contact with the head portion $T_5$ of fifth metatarsus $K_5$ serves to maintain a well balanced pedalling action. Thus the cyclist can achieve a smooth pedalling action and effectively transmit a large pedalling force to the pedal body in a comfortable and non-tiring manner.

In brief, a pedal of the present invention is provided with the first and second foot support portions 21 and 22 as described above so that the pedalling force is effectively transmitted to the pedal body 10 from the head portions of the first and at least the fifth metatarsi, whereby the cyclist can improve the efficiency of transmission of the pedalling force, achieve a smooth, well balanced, and non-tiring pedalling action and increase his effective pedalling force.

## Claims

1. A cycle pedal comprising a pedal body (10) having a pedal shaft (17), said body (10) having an upper surface on which are provided first and second foot support portions (21, 22) said second foot support portion being rearwardly offset with respect to said first foot support portion characterized in that said first and second foot support portions (21, 22) are formed and arranged substantially separately from each other to have a surface area sufficient simultaneously to support the head portion ($T_1$) of a first metatarsus ($K_1$) and at least the head portion ($T_5$) of the fifth metatarsus ($K_5$) of a cyclist's foot, respectively; at least said second foot support portion (22) being intersected by a plane through the pedal shaft axis ($X$—$X$) and at right angles to the general plane of said foot support portions (21, 22); said first and second foot support portions (21, 22) being displaced upwardly from the main pedal body (10).

2. A pedal according to Claim 1, wherein said pedal body (10) is provided with a foot support member (20) formed separately from said body and secured thereto, said foot support member (20) providing said first and second foot support portions (21, 22).

3. A pedal according to Claim 1 wherein said first and second foot support portions (21, 22) are formed integrally with said pedal body (10).

4. A pedal according to any one of Claims 1 to 3, wherein said first and second foot support portions (21, 22) have upper surfaces provided with a plurality of grooves (24).

5. A pedal according to Claim 5, wherein said grooves (24) comprise longitudinally and bilaterally extending portions and are generally loop-form.

6. A pedal according to any one of Claims 1 to 5 wherein said first foot support portion (21) is offset forwardly with respect to said plane through said pedal shaft axis ($X$—$X$).

7. A pedal according to any one of Claims 1 to 6 wherein the second foot support portion (22) has a form and area sufficient to accommodate the head portions ($T_3$, $T_4$, $T_5$) of each of the third to fifth metatarsi ($K_3$, $K_4$, $K_5$) of the cyclist's foot.

## Patentansprüche

1. Fahrradpedal mit einem Pedalkörper (10), der eine Pedalwelle (17) beinhaltet und eine obere Fläche aufweist, auf der eine erste und eine zweite Fußstütze (21, 22) ausgebildet sind, wobei die zweite Fußstütze bezüglich der ersten Fußstütze nach hinten versetzt ist, dadurch gekennzeichnet, daß die erste und die zweite Fußstütze (21, 22) im wesentlichen getrennt voneinander ausgebildet und angeordnet sind und eine Oberfläche bilden, die geeignet ist, den Vorderbereich ($T_1$) des ersten Mittelfußknochens ($K_1$) bzw. zumindest den Vorderbereich ($T_5$) des fünften Mittelfußknochens ($K_5$) des Fußes des Radfahrers zu unterstützen, wobei zumindest die zweite Fußstütze (22) von einer im rechten Winkel zur Hauptebene der Fußstützen (21, 22) durch die Pedalwellenachse ($X$—$X$) verlaufende Ebene geschnitten wird und die erste und die zweite Fußstütze bezüglich des Pedalkörpers (10) nach oben verschoben sind.

2. Pedal nach Anspruch 1, dadurch gekennzeichnet, daß der Pedalkörper (10) mit einem Fußstützelement (20) versehen ist, das getrennt vom Körper ausgebildet und befestigt ist, und daß das Fußstützenelement (20) die erste und die zweite Fußstütze (21, 22) bildet.

3. Pedal nach Anspruch 1, dadurch gekennzeichnet, daß die erste und die zweite Fußstütze (21, 22) einstückig mit dem Pedalkörper (10) ausgebildet sind.

4. Pedal nach einem der Ansprüche 1 bis 3, dadurch gekennzeichnet, daß die oberen Oberflächen der ersten und der zweiten Fußstütze (21, 22) mit einer Anzahl von Rillen (24) versehen sind.

5. Pedal nach Anspruch 4, dadurch gekennzeichnet, daß die Rillen (24) sich in Längsrichtung und seitlich erstreckende Bereiche aufweisen und im wesentlichen Schleifenform haben.

6. Pedal nach einem der Ansprüche 1 bis 5, dadurch gekennzeichnet, daß die erste Fußstütze (21) bezüglich der durch die Pedalwellenachse ($X$—$X$) laufenden Ebene nach vorn versetzt ist.

7. Pedal nach einem der Ansprüche 1 bis 6, dadurch gekennzeichnet, daß die zweite Fußstütze (22) in Form und Fläche so ausgebildet ist, daß sie geeignet ist, die Vorderbereiche ($T_3$, $T_4$, $T_5$) von jedem der dritten bis fünften Mittelfußknochen ($K_3$, $K_4$, $K_5$) des Fußes des Radfahrers zu unterstützen.

## Revendications

1. Pédale pour vélo, comprenant un corps de pédale (10) ayant un arbre de pédale (17), ledit corps (10) présentant une surface supérieure sur laquelle sont ménagées une première et une seconde parties (21, 22) d'appui du pied, ladite seconde partie d'appui du pied étant déportée vers l'arrière par rapport à ladite première partie d'appui du pied, caractérisée en ce que lesdites première et seconde parties (21, 22) d'appui du pied sont formées et arrangées substantiellement séparément l'une de l'autre pour obtenir une surface suffisante pour supporter simultanément respectivement la zone de tête ($T_1$) d'un premier métatarse ($K_1$) et au moins la zone de tête ($T_5$) d'un cinquième métatarse ($K_5$) du pied d'un cycliste; au moins ladite seconde partie (22) d'appui du pied étant coupée par un plan passant par l'axe de l'arbre de pédale ($X$—$X$) et perpendiculaire au plan général desdites parties (21, 22) d'appui du pied; lesdites première et seconde parties (21, 22) d'appui du pied étant déplacées vers le haut à partir du corps principal de pédale (10).

2. Pédale suivant la revendication 1, dans laquelle ledit corps de pédale (10) est muni d'un élément (20) de support du pied constitué indépendamment dudit corps et fixé à celui-ci, ledit élément (20) de support du pied fournissant lesdites première et seconde parties (21, 22) d'appui du pied.

3. Pédale suivant la revendication 1, dans laquelle lesdites première et seconde parties (21, 22) d'appui du pied sont intégralement façonnées avec ledit corps de pédale (10).

4. Pédale suivant l'une ou l'autre des revendications 1 à 3, dans laquelle lesdites première et seconde parties (21, 22) d'appui du pied possèdent des surfaces supérieures dotées d'une pluralité de rainures (24).

5. Pédale suivant la revendication 4, dans laquelle lesdites rainures (24) comprennent des parties s'étendant de manière longitudinale et bilatérale et sont généralement en forme de boucle.

6. Pédale suivant l'une ou l'autre des revendications 1 à 5, dans laquelle ladite première partie (21) d'appui du pied est déportée vers l'avant par rapport audit plan passant par ledit axe de l'arbre de pédale ($X-X$).

7. Pédale suivant l'une ou l'autre des revendications 1 à 6, dans laquelle la seconde partie (22) d'appui du pied possède une forme et une superficie suffisantes pour recevoir les zones de tête ($T_3$, $T_4$, $T_5$) de chaque métatarse, du troisième au cinquième ($K_3$, $K_4$, $K_5$), du pied du cycliste.

FIG. 1

0 055 598

FIG.2

FIG.3

FIG.4

0 055 598